# EUROPEAN PATENT APPLICATION

(11) **EP 4 769 084 A1**
(43) Date of publication of application: **01.07.2026**
(21) Application number: 25227653.0
(22) Date of filing: 30.12.2025
(51) Int. Cl.: G06F 3/01, G06T 3/00, G06T 19/00, G06F 3/04815

(54) **OBJECT INTERACTION IN A SCENE OF AN EXTENDED REALITY APPLICATION**

(30) Priority: 31.12.2024 EP 24223905
(71) Applicant: Koninklijke KPN N.V., 3072 AP Rotterdam (NL); Nederlandse Organisatie voor Toegepast-Natuurwetenschappelijk Onderzoek TNO, 2595 DA 's-Gravenhage (NL)
(72) Inventor: SUBRAMANYAM, Shishir, 2595 DA, 's Gravenhage (NL); HINDRIKS, Hendrikus Nathaniel, 2595 DA, 's Gravenhage (NL)
(74) Representative: De Vries & Metman

(57) **Abstract**

A method and an apparatus are described for interacting with a virtual object in a scene of an extended reality application, the method comprising: rendering a first scene of virtual objects based on a scene description, a first bounding space associated with a first coordinate system defining a first range of motion for virtual objects in the first scene, the scene description comprising a scene graph, wherein nodes of the scene graph include object nodes, each object node being associated with a virtual object and with object metadata, the object metadata comprising interaction information identifying virtual objects that are interactable and transform information associated with a position, orientation and/or scaling of an virtual object in the first scene; selecting nodes associated with interactable virtual objects based on the interaction information and rendering a second scene of interactable virtual objects associated with the selected nodes, a second bounding space associated with a second coordinate system defining a second range of motion for virtual objects in the second scene, the second range of motion being smaller than the first range of motion; receiving a user interface signal indicative of a user interacting with at least one of the interactable virtual objects in the second scene, the user interface signal triggering an action associated with the at least one interactable virtual object, the action causing a change in the position, orientation and/or scaling of the at least one interactable virtual object in the second scene; determining a change in the position, orientation and/or scaling of an interactable virtual object in the first scene that corresponds to the at least one interactable virtual object in the second scene, the determining being based on the change in the position, orientation and/or scaling of the at least one interactable virtual object in the second scene and a coordinate transform between the first and second coordinate system; and, updating the scene description file, the updating including updating the transform information associated the interactable virtual object in the first scene based on the change in the position, orientation and/or scaling of the interactable virtual object in the first scene.

## Description

### Technical field

The embodiments relate to object interaction in an extended reality scene, and, in particular, though not exclusively, to methods and systems for interacting with a virtual object in a scene of an extended reality application and a computer program product for executing such methods.

### Background

MPEG SD is a new standard for enabling description and execution of interactive media scenarios. The MPEG SD standard extends the gITF scene specification standard by adding support for media assets such as video, 3D meshes and point clouds. Specifically, MPEG SD introduces an explicit decomposition between scene description, presentation and media operations. The Presentation Engine (PE) is responsible for rendering of the scene provided using the scene description document. The PE delegates the retrieval, parsing and decoding of media to the Media Access Function (MAF), which then provides the required media assets in the requested format using memory buffers as an interface to the PE.

Currently MPEG SD does not directly address accessibility issues for users with physical limitations, e.g. limitations in mobility or vision. In current state-of-the-art extended reality XR applications users must specify a bounding box of their physical space referred to the play area. The MPEG scene description standard ISO/IEC FDIS 23090-14 allows specifying the minimum required space for such play area. An XR application can skip virtual assets in a scene description that are attached to a so-called AR anchor if the play area is less than the minimum required space. This safety feature ensures that users do not injure themselves by colliding with physical objects such as furniture while being in an XR experience. This however does not address issues related to limitations of the user's range of motion when interacting with one or more objects in a rendered scene that is presented to the user.

Hence, from the above it follows there is a need in the art for improved methods and systems for interacting with virtual objects in an extended reality scene.

### Summary

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object-oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks. Additionally, the Instructions may be executed by any type of processors, including but not limited to one or more digital signal processors (DSPs), general purpose microprocessors, application specific integrated circuits (ASICs), field programmable logic arrays (FP- GAs), or other equivalent integrated or discrete logic circuitry.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In an aspect, the embodiments relate a method of interacting with a virtual object in a scene of an extended reality application. In an embodiment, the method may comprise rendering on the basis of a scene description a first scene comprising virtual objects, the first scene being associated with a first coordinate system, a first bounding space defining a first range of motion for interacting with virtual objects in the first scene, the scene description comprising a scene graph, wherein nodes of the scene graph include object nodes, each object node being associated with a virtual object and with object metadata, the object metadata comprising interaction information identifying if a virtual object is an interactable virtual object and transform information comprising a position, orientation and/or scaling of the virtual object; selecting nodes associated with interactable virtual objects based on the interaction information and rendering a second scene comprising interactable virtual objects associated with the selected nodes, the second scene being associated with a second coordinate system, a second bounding space defining a second range of motion for interacting with virtual objects in the second scene, the second range of motion being smaller than the first range of motion; receiving a user interface signal indicative of a user interacting with at least one of the interactable virtual objects in the second scene, the user interface signal triggering an action associated with the at least one interactable virtual object, the action causing a change in the position, orientation and/or scaling of the at least one interactable virtual object in the second scene; determining a change in the position, orientation and/or scaling of an interactable virtual object in the first scene that corresponds to the at least one interactable virtual object in the second scene, the determining being based on the change in the position, orientation and/or scaling of the at least one interactable virtual object in the second scene and a transformation, preferably a coordinate transform, defining a spatial relation between the first coordinate system and the second coordinate system; and, updating the scene description, the updating including updating the transform information associated with the interactable virtual object in the first scene based on the change in the position, orientation and/or scaling of the interactable virtual object in the first scene.

The embodiments enable rendering a second scene based on selected interactable objects described in a scene description of a first scene, wherein the second scene is rendered in space that has a smaller range of motion that the first scene so that user which has a physical limitation can interact with the virtual objects in a similar way as a user that has no physical limitation is interacting with virtual objects in the first scene. Once the user has interacted with virtual objects in the second scene the interactions may be mapped back to the first scene. Hence, a change in a position of a virtual object in the second scene can be mapped back into a change in a position of a corresponding virtual object in the first scene. After the mapping the scene description can be updated.

Besides a manipulation, e.g. a translation, rotation and/or scaling, of a virtual object, other types of interactions with virtual objects that cause certain actions of an interactable virtual object in the second screen, such as haptic feedback, a sound effect, a playout of an animation, a playout of media data may be mapped to the first scene and the scene description may be updated accordingly.

In an embodiment, the embodiments may further include determining an update patch, preferably a JSON patch, for updating the scene description file; and, sending the update patch to a server for distributing the update patch to other users of the extended reality application.

In an embodiment, the user interface signal may trigger a manipulation of the at least one interactable virtual object in the second scene, wherein the manipulation may include a translation, rotation and/or scaling of the at least one interactable virtual object.

In an embodiment, the manipulation of the at least one interactable virtual object may be augmented, for example by applying scale adjustments to the time period in which the translation, rotation and/or scaling is performed.

in an embodiment, augmentation of a virtual object in the second scene may include scaling the size and/or colour of the virtual object.

In a further embodiment, augmentation of a virtual object in the second scene may include augmenting haptic feedback associated with an interactable virtual object in the second scene.

In yet a further embodiment, augmentation of a virtual object in the second scene may include augmenting the manipulation of an virtual object, e.g. translation, rotation and/or scaling, based on user interaction.

In an embodiment, the method may include configuring the dimensions of the second bounding space .

In an embodiment the dimensions of the second bounding space may be set by the user.

In an embodiment, the rendering device or a presentation engine of the rendering device may be configured to receive information about the second bounding space and the second range of motion.

In an embodiment, the interaction information may further comprises information identifying whether an interactable virtual object belongs to one or more semantic categories.

In an embodiment, the nodes associated with interactable virtual objects may be selected based on a semantic category.

In an embodiment, the interaction information may further comprise information identifying whether an interactable virtual object is available for user interaction.

In an embodiment, the availability of an interactable virtual object for user interaction being based on the position of the interactable virtual object in the scene or based on the timeline of the scene.

In an embodiment, the interfaction information may include one or more interaction rules, the one or more interaction rules defining one or more constraints for the position, speed and/or behaviour of interactable virtual objects in the first scene.

In an embodiment, an interaction rule may signal that the speed (linear speed and/or angular speed) of a virtual object may be constrained to a maximum value. In other embodiments, an interaction rule may signal that the speed of a virtual object may be constrained to a minimum value. In further embodiments, an interaction rule may signal that the speed of a virtual object may be constrained to a range defined by a minimum value and a maximum value.

In a further embodiment, an interaction rule may signal a position of a virtual object may be constrained to coordinates that are positioned within a bounding box.

In an embodiment, the bounding box may be axis-aligned bounding box, wherein the edges of the bounding box are aligned with the coordinate axis of the scene. For example, in an embodiment, the metadata may signal that the position of a virtual object is limited to positions within a bounding box. In a further embodiment, an interaction rule may signal that an activation of a virtual button may be constrained by a number of allowed clicks per time unit.

In an embodiment, the method may comprise: determining if the change in the position, orientation and/or scaling of the interactable virtual object in the first scene complies with the one or more interaction rules.

In an embodiment, the determining being performed before updating the scene description.

In an embodiment, the one or more interaction rules may include: determining if the change in the position and/or orientation of the interactable virtual object in the first scene is larger than a maximum value and/or smaller than a minimal value; and/or, determining if the change in the position and/or orientation of the interactable virtual object in the first scene per unit of time is larger than a maximum value and/or smaller than a minimal value.

In an embodiment, the interaction information may include one or more triggers associated with each interactable virtual object, each trigger of the one or more triggers defining at least one of: a collision trigger, a proximity trigger, a visibility trigger, a user input trigger, a timer trigger that is activated based on a timer

In an embodiment, the collision and proximity trigger may be activated based on a distance between the interactable virtual object and another virtual object.

In an embodiment, the visibility trigger may be based on the interactable virtual object appearing in the viewport of extended reality rendering device.

In an embodiment, the user input trigger may be based on a user activating a switch of an extended reality user interface controller.

In an embodiment, a trigger may be associated with one or more actions so that if a trigger is activated at least part of the one or more actions are executed.

In an embodiment, each of the one or more actions may include: a manipulation, e.g. a translation, rotation and/or scaling, of the interactable virtual object, a haptic feedback, a sound effect, a playout of an animation, and/or a playout of media data.

In an embodiment, the first scene may be rendered in the viewport of a rendering device.

In an embodiment, the second scene may be rendered as a graphics overlay at a predetermined location in the viewport.

In an embodiment, a presentation engine may be configured to control the rendering of the first second and second scene.

In an embodiment, the presentation engine being further configured to instruct a media access function (MAF) to execute at least one of: the retrieval of media assets associated with the virtual objects, allocation of one or more buffers, decoding of the media assets and the storage of at least part of decoded media assets in one or more allocated buffers.

In a further aspect, the embodiments may relate to an apparatus, preferably a rendering device, comprising: a computer readable storage medium having computer readable program code embodied therewith, and a processor, preferably a microprocessor, coupled to the computer readable storage medium, wherein responsive to executing the computer readable program code, wherein the processor may be configured to perform one or more of the following executable operations: rendering on the basis of a scene description a first scene comprising virtual objects, the first scene being associated with a first coordinate system, a first bounding space defining a first range of motion for interacting with virtual objects in the first scene, the scene description comprising a scene graph, wherein nodes of the scene graph include object nodes, each object node being associated with a virtual object and with object metadata, the object metadata comprising interaction information identifying if a virtual object is an interactable virtual object and transform information comprising a position, orientation and/or scaling of the virtual object; selecting nodes associated with interactable virtual objects based on the interaction information and rendering a second scene comprising interactable virtual objects associated with the selected nodes, the second scene being associated with a second coordinate system, a second bounding space defining a second range of motion for interacting with virtual objects in the second scene, the second range of motion being smaller than the first range of motion; receiving a user interface signal indicative of a user interacting with at least one of the interactable virtual objects in the second scene, the user interface signal triggering an action associated with the at least one interactable virtual object, the action causing a change in the position, orientation and/or scaling of the at least one interactable virtual object in the second scene; determining a change in the position, orientation and/or scaling of an interactable virtual object in the first scene that corresponds to the at least one interactable virtual object in the second scene, the determining being based on the change in the position, orientation and/or scaling of the at least one interactable virtual object in the second scene and a transformation, preferably a coordinate transform, defining a spatial relation between the first coordinate system and the second coordinate system; and, updating the scene description, the updating including updating the transform information associated with the interactable virtual object in the first scene based on the change in the position, orientation and/or scaling of the interactable virtual object in the first scene.

In an embodiment, the processor of the apparatus may be further configured to perform any of the method steps as described above.

The embodiments include a presentation engine that enables a user to select interactable virtual objects of a first extended reality scene and to render the selected interactable virtual objects of the first scene as a second extended reality scene wherein the range of motion of interacting with virtual objects in the second that is smaller than the range of motion of interacting with virtual objects in the first scene.

In an embodiment, the selection of the virtual objects to be rendered in the second scene may be based on a semantic segmentation of the scene.

In an embodiment, the first and second scene may form a composite render in the viewport of the rendering device of the user.

In an embodiment, the location of the second scene in the viewport may be a location that is convenient to the user.

The second rendered scene may also be referred to as the accessibility layer. Within this layer, the user with a physical limitation may interact with selected virtual objects of the scene in a similar way as users which do not have a physical limitation interact with virtual objects in the first scene. Interactions within the accessibility layer may be mapped back onto the original virtual objects and the scene description document may be updated in view of these interactions.

Extensions to the MPEG SD information model may allow the presentation engine to provide the functionality of the accessibility layer. The extensions may include labelling parts of the scene, in particular nodes of a scene that are associated with interactable virtual objects using metadata, and by restricting the interactions with objects in the second scene based on interaction rules to limit interactions that a scene author considers reasonable.

In a further embodiment, the presentation engine may augment manipulations of a virtual object by user interactions.

In an embodiment, an augmentation of a manipulation of a virtual object may include applying scale adjustments to the velocity of a virtual object to move the virtual object from a first to a second position in the second scene.

The embodiments may also relate to a computer program product comprising instructions which, when the program is executed by a computer, cause the computer to carry out the method steps as described above.

The embodimenmts will be further illustrated with reference to the attached drawings, which schematically will show embodiments according to the invention. It will be understood that the invention is not in any way restricted to these specific embodiments.

### Brief description of the drawings

**Fig. 1A** and **1B** depicts an example of a hierarchical data model for describing a scene;
**Fig. 2** depicts a media system for rendering assets based on a scene description;
**Fig. 3** illustrates the pipelines of the media system for rendering assets based on a scene description;
**Fig. 4** illustrates a logical architecture of a rendering system that may be used by the embodiments in this disclosure;
**Fig. 5** illustrates a data format for updating a scene description based on patches;
**Fig. 6A-6C** illustrate user interaction with virtual objects in an extended reality scene;
**Fig. 7A-7D** illustrate an example of a method for interacting with a virtual object in an extended reality scene according to an embodiment;
**Fig. 8** illustrates a method of interacting with a virtual object in a scene of an extended reality application according to an embodiment;
**Fig. 9A** and **9B** illustrate a method of interacting with a virtual object in a scene of an extended reality application according to an embodiment;
**Fig. 10** depicts a schematic of a system for rendering scenes of an extended reality application.
**Fig. 11** depicts a block diagram illustrating an exemplary data processing system that may be used with embodiments described in this disclosure.

### Description of the embodiments

3D assets are digital files that represent objects or elements in a three-dimensional space. These assets consist of data that define the shape, texture, and appearance of these objects, allowing them to be rendered and animated in various software applications. One of the most common types of 3D assets are 3D models. These are digital representations of physical objects such as characters, vehicles, buildings, or props. 3D modeling is the process of developing a mathematical coordinate-based representation of a surface of an object (inanimate or living) in three dimensions.

A 3D model may represent the geometry of an object in the form of a mesh. Typically, a mesh may define collection of points in 3D space wherein the points define vertices which are connected by various geometric entities such as triangles, lines, curved surfaces, etc. to form a surface of a 3D object. Hence, these 3D models are hereafter also referred to as virtual objects. 3D models can be created manually, algorithmically (procedural modeling), or by scanning. The surface of a 3D mesh may be further defined with texture mapping. A scene may be created using a plurality of 3D models. A 3D model can be displayed as a two-dimensional image through a process called 3D rendering.

Real-time rendering algorithms are typically structured using pipelines. Commonly used rendering pipelines are defined by platforms like DirectX and OpenGL. Graphical Processing Units (GPUs) have been designed and evolved with and as part of these rendering pipelines, and offer processing capacity for highly parallelized algorithms. A rendering pipeline can usually be divided into different stages, including an application stage, wherein the definition of the 3D environment (or scene) may be stored and sections of the scene are selected, pre-processed, and sent to the following stages, namely the geometry stage, at which where the relevant parts of the virtual objects in an extended reality scene are projected onto a 2D plane and the rasterization stage, wherein the color of each mapped object is determined.

Multiple virtual objects can be used to create scenes for rendering. In a digital description of such scenes, additional metadata may be included such as: the position and orientation of each object, the configuration of the (virtual) camera, the position, configuration and type of lights, and references to external files and media. Typically, scene descriptions are based on a hierarchical model, wherein entities may be defined with respect to each other. Such hierarchical model simplifies the specification of complex and/or detailed relationships such as the location and relationships of bones in a skeleton. Different formats for scene descriptions include gITF, X3D and MPEG SD.

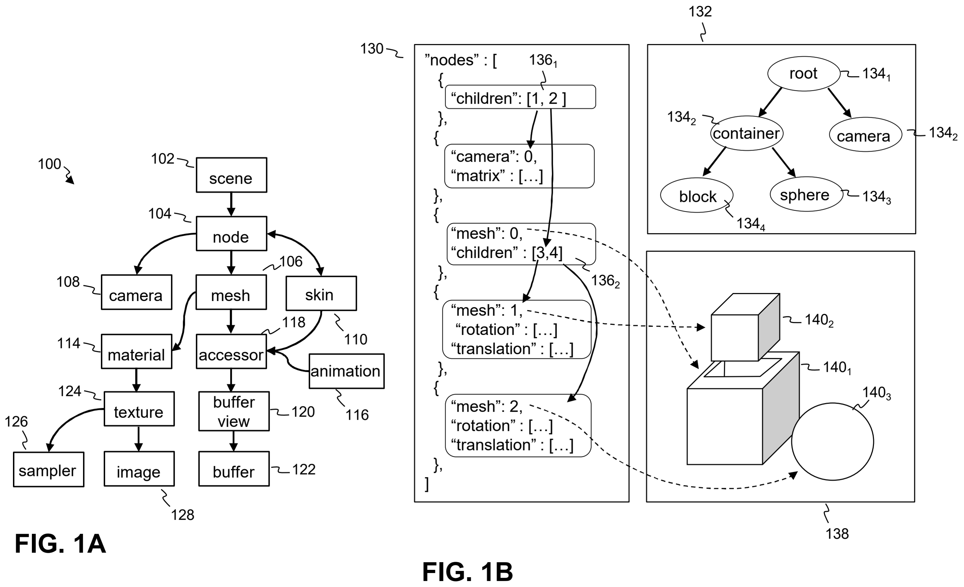

**Fig. 1A** and **1B** depicts an example of a hierarchical data model for describing a scene according to ISO/IEC FDIS 23090-14 Information technology - Coded representation of immersive media - Part 14: Scene Description for MPEG Media (hereafter referred to as MPEG SD). In this example the scene is described using the gITF format which includes gITF entities and information defining relationships between gITF entities. The gITF format is an interoperable format for the exchange of 3D and scene data developed by the Khronos Group. gITF documents are serialized using either the JSON format or a binary glTF-specific format (.glb).

As shown in **Fig. 1A****,** a scene node **102** may be the entry point for the description of a scene. The scene refers to nodes **104** that define the scene graph. The scene graph linkes nodes describing virtual objects of the extended reality scene. A node may contain a transformation (e.g., rotation or translation), and it may refer to further (child) nodes. A node may refer to mesh **106** describing a geometric object that appears in the scene, a camera instance **108** that is associated with the node which define the view configuration for rendering the scene or a skin **110** that describes a mesh deformation. A skin defines parameters that are required for vertex skinning, which allows the deformation of a mesh based on the pose of a virtual character. The values of these parameters are obtained from an accessor. The description may further comprise accessor objects **112** which may be used for accessing the actual geometry data and the materials **114** which define the appearance of the object when it is rendered. Further, an animation **116** may describe how transformations of certain nodes (e.g., rotation or translation) change over time.

The accessor **118** may be used as an abstract source of arbitrary data. It is used by the mesh, skin, and animation, and provides the geometry data, the skinning parameters and the time-dependent animation values. It refers to a bufferView **120,** which is a part of a buffer **122** that contains the actual raw binary data. The materials may be further associated with parameters that define the appearance of an object. It usually refers to texture objects **124** that will be applied to the rendered geometry. The texture may be defined by a sampler **126** and an image **128,** wherein the sampler defines how the texture image should be placed on the object. As can be seen from this model, scenes may be defined as arrays of nodes, where the nodes may have sets of children. Vertex and texture data can be referred to using buffers and bufferviews respectively. Sets of textures may be mapped onto meshes using materials.

**Fig. 1B** depicts an example of a gITF document comprising a hierarchical data model describing a scene. The document may be a JSON file **130** describing the contents of a 3D scene. It may comprise a description of a scene structure **132** including a hierarchy of nodes **134₁₋₄** defining the scene graph. At least part of the nodes may be associated with a 3D model (e.g. a mesh) defining the objects in the 3D scene. These nodes may be referred to as object nodes. The nodes may be organized in a tree-like structure as shown in the figure, including a root node, child nodes and leaves. A node may contain an array referred to as called children **136_{1,2}** that contains the indices of its child nodes. Hence, each node may be one element of a hierarchy of nodes, which together defines the structure of the scene as a scene graph. Virtual objects **140_{1,2}** that appear in the scene **138** are defined using meshes that are associated with to the nodes. Further, materials may define the appearance of the objects, animations describe how the 3D objects are transformed (e.g., rotated or translated) over time, skins define how the geometry of the objects is deformed based on a skeleton pose and cameras describe the view configuration for the renderer.

It is noted that the hierarchical data model for describing a scene as explained with reference to **Fig. 1A** and **1B** is just one of a number of possible representations of such hierarchical data model. For example, the ISO X3D standard describes an XML-based format for the specification of 3D scenes, which is maintained by the Web3D Consortium. Main implementations of the X3D standard are X3DOM and X_ITE. In X3D, scenes are described using a hierarchical node structure (powered by XML), that allows for the definition of assets and the scene with similar features as gITF (in fact X3D supports including gITF documents).

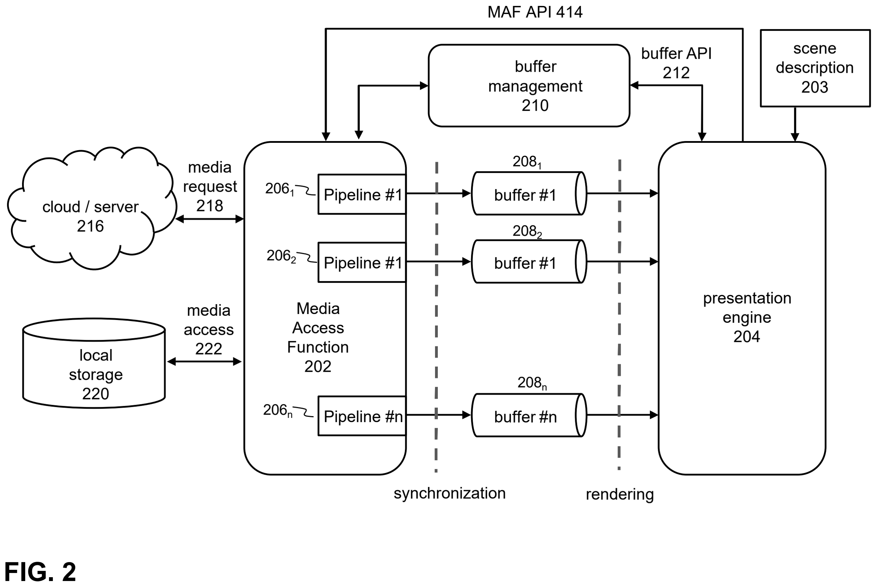

**Fig. 2** depicts a system for rendering assets based on a scene description that may be used by the embodiments in this disclosure. The system is known from MPEG SD. The system may include a presentation engine PE **204** and a media access function MAF **202.** The presentation engine may process assets, e.g. virtual objects in a 3D scene, 2D scenes and media content, e.g. video, and prepare the assets for rendering by a rendering device (not shown). The PE may process assets based on a scene description **203.** The MAF and the PE may communicate with each other via a MAF application programming interface (MAF API) **214.** This way, the PA may instruct the MAF to retrieve and prepare assets, e.g. virtual objects and/or media content, that are needed for rendering a scene as defined in the scene description. To that end, the scene description may include information about locations, e.g. resource locators such as URLs or URIs, where assets that are needed from a scene can be retrieved. This information may be provided by the PA to the MAF in one or more instructions (e.g. using one or more MAF API calls). The MAF may retrieve the assets from a local storage **220** via a media access connection **222** or from the cloud or a server network **216** via one or more media requests. The PE may be responsible for rendering the scene provided by the scene description document, wherein the PE may delegate retrieval, parsing and decoding of media to the MAF. The MAF may then provide the required media in the requested format using buffers as an interface to the PE. Typically, the buffer is a circular buffer. The buffers may be managed by a buffer management module **210** wherein a buffer API **212** provides an interface for the MAF and the PE to the buffer management module. If assets, e.g. media objects, are received by the MAF, it may initiate and allocate one media pipeline **206₁₋ₙ** for each media object, wherein each media pipeline is associated with a single buffer, which can be accessed by the PE.

The media pipelines and the buffers allow decoupling of the rendering by the PE and the media retrieval by the MAF. The PE can use information in the scene description to instruct the MAF to retrieve assets of a scene, e.g. media objects and to initiate pipelines with associated buffers to process media objects so that the PE can retrieve each processed objects via the buffer.

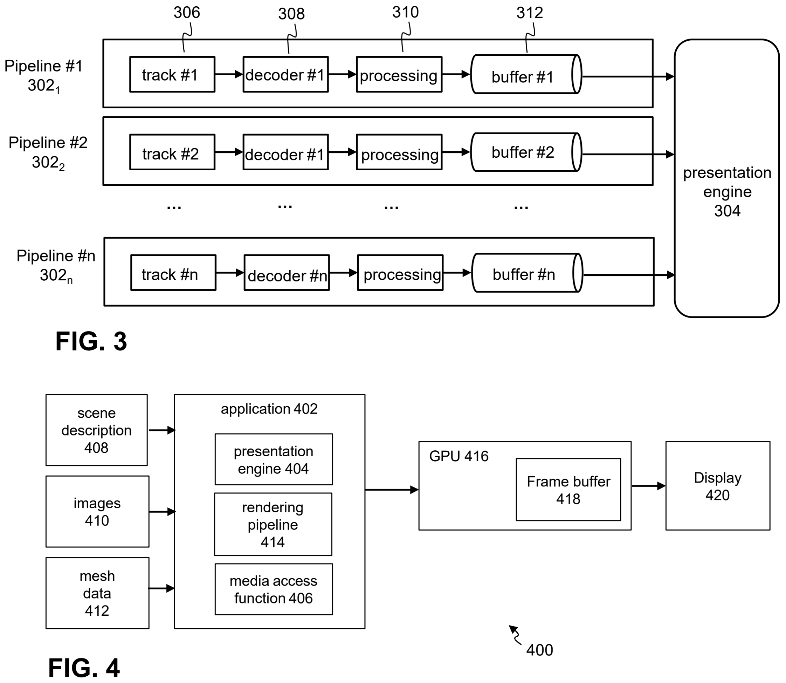

**Fig. 3** illustrates the pipelines of the media system as depicted in **Fig. 2** in somewhat greater detail. Each of the pipelines **302₁₋ₙ** may be associated with encoded media data representing a media object which may be stored as a track **306** as known from the ISO Base Media File format. Encoded media data may be formatted in tracks and each track may include media data associated with a specific asset, e.g. video data, point cloud, a mesh (e.g. vertex positions), a texture image, etc. The MAF may retrieve media data of a track and provide the data to a decoder **308** for decoding the media data into decoded media data, which can be subsequently processed, e.g. formatted, by a media processing unit **310** before stored into a buffer **312.**

**Fig. 4** illustrates a logical architecture of a rendering system **400** that may be used by the embodiments in this disclosure. The system may include application **402** running on a processor, which may be configured to send logical instructions to one or more Graphical Processing Units (GPUs) **416** for rendering images onto a display **320,** e.g. a display of a head-mounted device or the like. A GPU may comprise one or more frame buffers **418** which are used to collect and store a digital representation of the next image to be displayed. The application may be configured to display an interactive scene (either 2D or 3D) which is defined in a scene description **408** as described with reference to the embodiments in the application. One or more rendering pipeline abstractions **414** may be used to specify how to render the scene according to the application-specific view. In this way, the application does not need worry about sending instructions to the GPU, but defers this responsibility to the rendering (pipeline) library. The application may further include a Presentation Engine (PE) **404** and Media Access Function (MAF) **406** as described with reference to **Fig. 1****.** The PE is responsible for setting up the presentation of the scene as indicated by a scene description document **408.** The PE achieves this by instructing the MAF to retrieve and prepare assets (e.g. 3D meshes **412** and images **410** comprising specific assets information, e.g. texture, color, materials, etc.) as specified by the scene description.

It is noted that **Fig. 4** is a non-limiting example of a logical architecture of a rendering system. Many variations are possible. For example, the frame buffer may also be used to write immediately to the display. Further, the application (or one or more parts thereof) may be implemented as software running on a Central Processing Unit (CPU), however it is also possible that the application (or one or more parts thereof) may be executed on a different system (e.g., the GPU itself or a System-on-a-chip (SoC)). Further, some parts of the application may be implemented in hardware. In further embodiment, the role of the GPU may be fulfilled by the CPU or other system, e.g., using software-based rendering or as an embedded specialized chip on the CPU. In another embodiment, the rendering pipeline may be part of the application itself.

Due to implementation details chosen by MPEG SD, the division between which assets are retrieved by the MAF or PE is not strict. The PE may retrieve assets specified in gITF, and the MAF may retrieve assets as specified by MPEG so there will be overlap in the assets that MAF and PE may retrieve. MPEG SD comprises of a set of extensions to gITF 2.0 dedicated to enable this functionality. These include the top-level extension MPEG_media that provides as array of media items that are referenced within the scene description document.

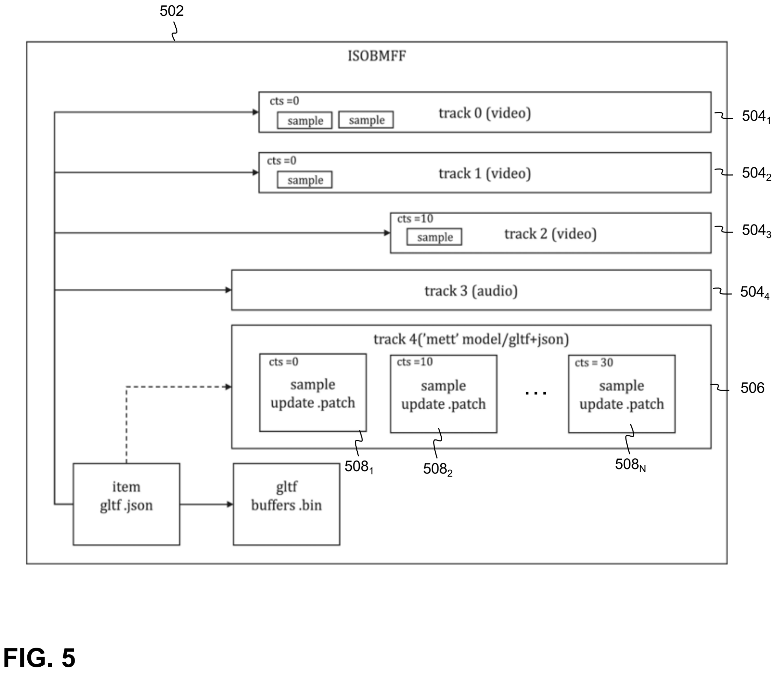

**Fig. 5** illustrates a data format for updating a scene description based on patches. In particular, the figure illustrates an ISOBMFF-based carriage format for a sequence of update patches **506_{1-N}** stored as a dedicated media track **506** next to video and audio tracks **504₁₋₄** associated with media data. The patches may be applied to a scene description document sequentially in time. The patches, which may be referred to as scene patches, may be JSON patches as specified in RFC 6902 from the IETF organisation. Such ISOBMFF-based data carriage format may be used both for SD documents and JSON patch documents. The order of the gITF nodes in the SD document may be used for referencing. Scene updates based on patches allow changing the order of nodes in the SD document using move operations and remove operations.

The MPEG SD standard extends the gITF scene specification standard by adding support for media. Specifically, MPEG SD introduces an explicit decomposition between scene description, presentation and media operations. MPEG SD supports interactivity with the use of two extensions, i.e. the MPEG_scene_interactivity and MPEG_node_interactivity at the scene and node level respectively. When present, node level interactivity is meant to complement scene level interactivity.

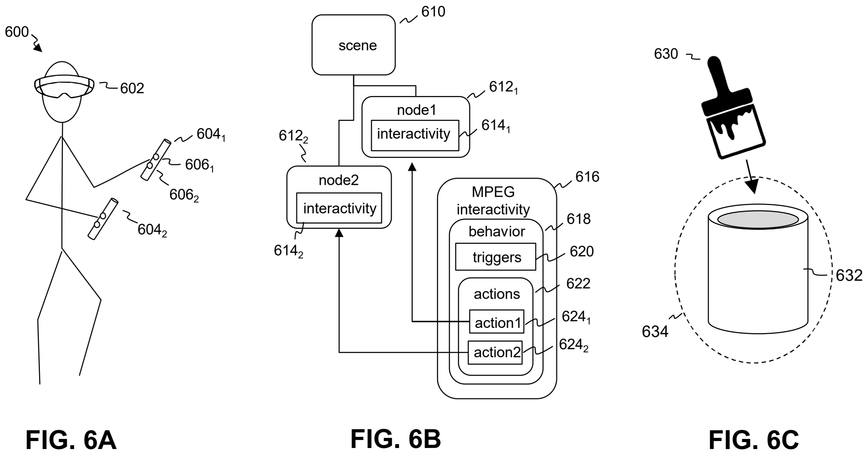

**Fig. 6A-6C** illustrate user interaction with virtual objects in an extended reality scene that may be used by the embodiments in this disclosure. As shown in **Fig. 6A****,** a user 600 of an extended reality application may use an user interface, e.g. a XR playout devices such as a head mounted device (HMD) or XR glasses **602** and XR controllers **604₁₋₂** which include sensors which are configured to translate hand- and arm motion, e.g. gestures, into control signals for controlling a virtual object that is rendered in the display of the XR playout device. Similarly, a head mounted device (HMD) or XR glasses include sensors and/or cameras which are configured to translate motion and/or expressions into control signals for controlling a virtual object. This way, during execution of an extended reality application a user may interact with virtual objects in a scene as e.g. shown in **Fig. 6C****.** In this example, the user may use XR controllers to control a virtual object, in this example a virtual paintbrush **630,** and let it interact with another virtual object, in this example a paint can **632.** An XR hand-controller may include switches **606₁₋₄** that may be used by the user to activate or trigger certain actions.

**Fig. 6B** illustrates how interaction with a virtual object is introduced in a scene description document that a rendering system uses for rendering a scene. The figure shows a simple example of a hierarchical structure of nodes **612_{1,2}** forming a scene graph **610** as discussed with reference to **Fig. 1A** and **1B****.** The scene or the nodes of the scene may be associated with metadata **614_{1,2}** signalling the PE of the rendering system that that the nodes are associated with interactable virtual objects. The metadata may specify what type of interaction is possible.

The metadata may include information about triggers **620** which may be used to detect a user intent, which are defined based on collisions, proximity, visibility and user input. For example, in an embodiment user input may activate a trigger to perform a certain action by pressing one or more switches of the XR controller as shown in **Fig. 6A****.** In a further embodiment, a trigger may be activated by an object that appears in the viewport of a head mounted device or XR glasses. In yet a further embodiment, a trigger may be activated when a virtual object is in the proximity of another object. This is illustrated in **Fig. 6C** wherein the second virtual object **632** (in this case a paint can) is located within a volume of interest **634** of a certain shape. When the first virtual object moves towards the boundary of the volume of interest an action may be triggered based on the distance between the first virtual object and the boundary of the volume of interest.

The metadata may include information about actions **622** that define the effect of user interaction. The metadata may include information about behaviours **618** which may be composed of combinations of triggers and actions. The metadata may further include control parameters for the different types of interactions.

Thus, when the XR experience is running a human user interaction with a virtual object may be realized by a user controlling an extended reality user interface, e.g. XR controller as depicted in **Fig. 6A****.** This interaction may be activated (i.e. associated actions are triggered) when the virtual object controlled by the user is moved towards a volume of interest containing a virtual object. The triggered actions realize different functionalities, like grasping, haptics feedback, sound effects or collision detection for object manipulation. Other types of triggers may be used in the scene description as well, for example triggers based on a timer or triggers based on a combination of actions by a user. The renderer system obtains a scene description and processes it as described above with reference to **Fig. 1-6****.** When a trigger is activated, the associated actions are performed.

In XR applications interaction control is typically based on the assumption that users have full range of motion when using XR user interfaces as depicted **Fig. 6****.** Therefore, a user having a limited range of motion due to a physical disability may experience problems when participating in an XR experience. Currently MPEG SD does not address accessibility issues for users with physical limitations. MPEG SD allows specifying the minimum required space for a scene and an XR application can skip virtual assets attached to an AR anchor if the available space is less than the minimum required space. This method is a safety feature to ensure user's do not injure themselves by colliding with other physical objects, such as furniture, in real space while participating in an XR experience. This feature however does not solve issues that users who have a limited range of motion due to a physical disability may experience when participating in an XR application. Currently, MPEG SD does not require the presentation engine (PE) to support accessibility functionality. Further, the presentation engine does not support context-sensitive enhancement of movements which may be desired when dealing with users who have physical limitations.

Optimizing the experience of a user having physical limitations requires specific information of a user's limitations and capabilities, which may be problematic in view of privacy regulations. Further, for multi-user experiences, it is desired that other users do not notice that a disabled person uses accessibility features that augment users' movements or interactions with virtual object in a scene so that all users are provided with the same XR experience and are treated fairly by the XR application regardless whether a user is physically limited or not. The embodiments in this disclosure address these problems using a presentation engine that is capable of reducing the range of motion that is required to interact with objects in a scene so that a user that has a physical limitation can interact with objects in a scene in the same way as user that do not have a physical limitation.

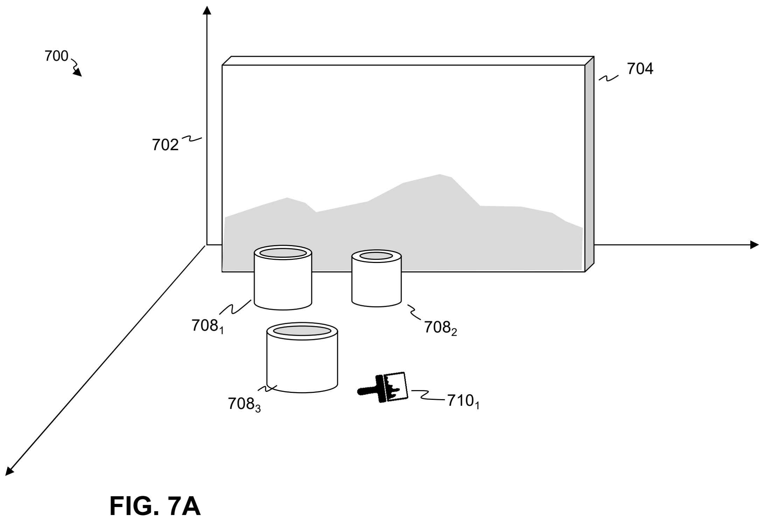

**Fig. 7A-7D** illustrate an example of a method for interacting with a virtual object in an extended reality scene according to an embodiment. In particular, the figures illustrate an example of a method for enabling a user that has a limited the range of motion to interact with virtual objects in an extended reality scene.

**Fig. 7A** shows an example of a first scene that may be defined in a scene description document. The scene may be described as a scene graph comprising a hierarchical structure of nodes, wherein each node is associated with a virtual object of the extended reality scene as for example explained with reference to **Fig. 1A** and **1B****.** The extended reality scene is associated with a first coordinate system **702.** Further, a bounding space, such as bounding box, associated with the first coordinate system may define the space in which the virtual objects of the first scene may be positioned. In an embodiment, the bounding space may be a bounding box. In in a further embodiment, the bounding box may be aligned with the axis of first coordinate system delimiting a space in which the virtual objects may be positioned.

A presentation engine may process the scene description to control a rendering device to render a first scene comprising interactable virtual objects, three paint cans **710₁₋₃** and a paintbrush **710₁** which may be used to paint a wall **704.** Some or all the virtual objects, e.g. the paintbrush, at least a first paint can **710₁** and the wall, may be defined as interactable objects as explained with reference to **Fig. 6A-6C****.** In this case, the wall that needs to be painted may be defined as a target of an interaction with a paintbrush that is controlled by a user using a user interface.

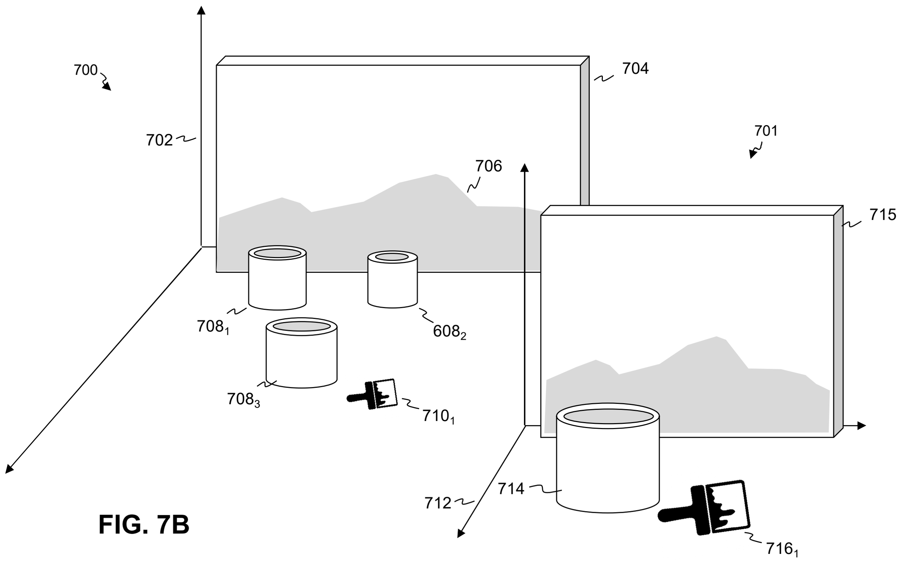

Typically, the bounding space of the first scene is set by the content author in the scene description and is optimized for users that do not have any physical limitations. To enable a user which has a limited range of motion to interact with the objects in the scene, the presentation engine is configured to select interactable virtual objects from the first scene and to render a second scene including the selected interactable virtual objects, wherein the second scene is associated with its own second coordinate system and a second bounding volume, which is smaller than the first bounding volume and which can be set by the user. This is illustrated in **Fig. 7B** that includes the first rendered scene **700** including the virtual objects and a second rendered scene **701** including virtual objects selected from the first scene, in this case the paint brush at a first position **716₁** in the scene, a first paint can **714** and the wall **715** that needs to be painted. The second scene has its own coordinate system **712** and a bounding volume in which the virtual objects may be positioned which is smaller than the bounding volume of the first scene. Reducing the bounding space effectively reduces the range of motion for interacting with virtual objects.

As shown in the figure, the virtual objects in the second scene have corresponding virtual objects in the first scene. It is noted however that the virtual objects in the second scene do not need to be exact copies of the corresponding virtual objects in the second scene. The presentation engine may be configured to apply augmentations to the virtual objects in the second scene. For example, in an embodiment, the augmentation of the virtual objects in the second scene may include scaling the size and/or colour of the virtual objects for users who are visually impaired. In a further embodiment, haptic feedback associated with an interactable virtual object in the second scene may be augmented for users that are physically limited. In yet a further embodiment, the manipulation of an interactable virtual object, e.g. translation, rotation and/or scaling, based on use interaction may be augmented for interactable virtual objects in the second scene. These augmentations may be set by configuring the presentation engine. In an embodiment, the user may set the augmentations. In a further embodiment, user may select a number of pre-configured augmentations from a list of pre-configured augmentations. These pre-configured augmentations may be optimized for certain physical limitations of a user.

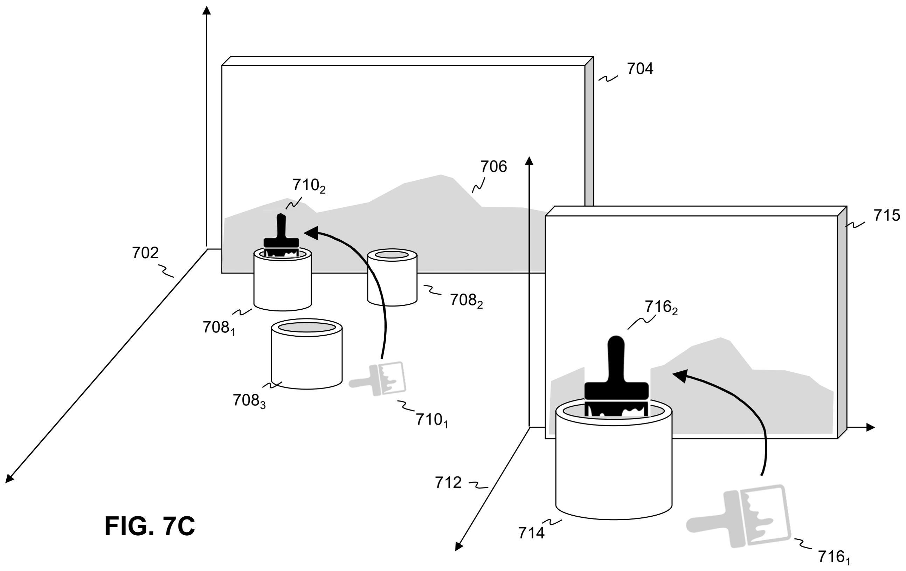

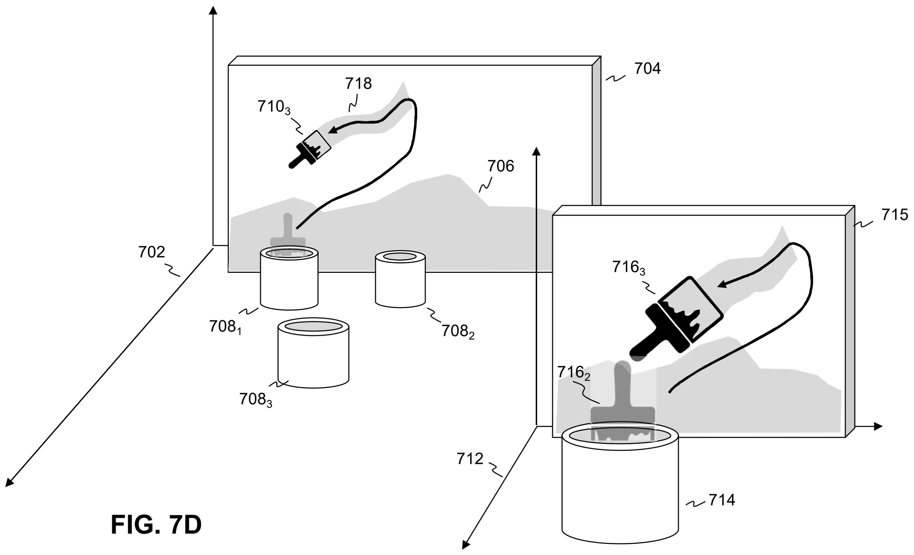

A user may then interact with the virtual objects as shown in **Fig. 7C** and **7D****.** **Fig. 7C** illustrates an example wherein user interaction is used to pick up the pain brush in the second scene and to move (including translation and rotation) from a first position **716₁** to a second position **716₂** at the point can **714.** The user interaction with the paint brush and the interaction between the paint brush may be controlled based on triggers and actions associated with the interactable virtual objects as explained previously. As shown in the figure, during interaction process, the interactions associated with the virtual objects in the second scene are mapped back to interactions associated with corresponding virtual objects in the first scene. In particular, the mapping of the translations, rotations and/or scaling of the virtual objects in the second scene may be transformed into translations, rotations and/or scaling in the first scene based on a coordinate transform between the first coordinate system and the second coordinate system.

Besides a manipulation, e.g. a translation, rotation and/or scaling, of a virtual object, other types of interactions with virtual objects that cause certain actions of an interactable virtual object in the second screen, such as haptic feedback, a sound effect, a playout of an animation, a playout of media data may be mapped to the first scene as well. Before applying the transformed interactions to the corresponding virtual objects in the first scene, the transformed interactions may be controlled based on interaction rules that define constraints (e.g. in terms of translation, speed, color, sound volume, etc.) so that the transformed interactions do not substantially deviate from users interacting directly with the virtual objects in the first scene. Then, the transformed interactions may be applied to the corresponding virtual objects in the first scene so that the interactive rendering process in the first scene is in sync with the rendering process of the second scene.

A similar process is illustrated in **Fig. 7D** wherein a further user interaction is illustrated which includes moving the paintbrush out of the paint can to the wall that needs to be painted. A proximity trigger between the point brush and the wall may be used to animate a painting process as shown in the figure. Also this interaction may be mapped to the first scene so that the interactions between the corresponding virtual objects in the first scene can be executed.

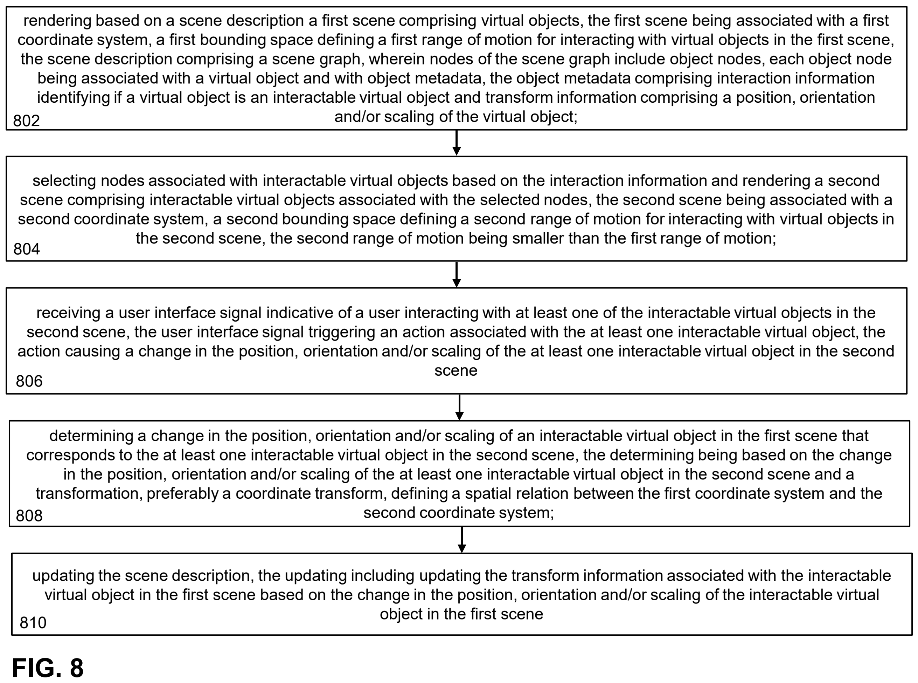

**Fig. 8** illustrates a method of interacting with a virtual object in a scene of an extended reality application according to an embodiment. As shown in the figure, the method may start with rendering a first scene of virtual objects based on a scene description, wherein a first bounding space, e.g. a first bounding box, associated with a first coordinate system may defined. The virtual objects of the first scene are positioned within the first bounding space so that the dimensions of the first bounding space define a first range of motion for a user interacting with virtual objects in the first scene (step **802**).

The scene description may comprise a scene graph, wherein nodes of the scene graph include object nodes, wherein each object node may be associated with a virtual object and with object metadata. The object metadata may include interaction information identifying interactable virtual objects. Further, the object metadata may identify transform information associated with a position, orientation and/or scaling of a virtual object in the first scene.

Based on a scene description, nodes may be selected that are associated with interactable virtual objects and a second scene of interactable virtual objects associated with the selected nodes may be rendered (step **804**). The second scene is associated with a second bounding space, e.g. a second bounding box, and a second coordinate system, The virtual objects of the second scene are position within the second bounding space so that the dimensions of the second bounding space define a second range of motion for the user interacting with virtual objects in the second scene.

This second bounding space may be set by the user so that the user can determine a desired second range of motion. To that end, the rendering device or the presentation engine of the rendering device may be configured to receive information about the second bounding space and the associated second range of motion from the user. Here, the second range of motion is smaller than the first range of motion so that a user with a limited range of motion can still control an XR user interface to interact with the virtual objects in the second scene.

A signal of a user interface, e.g. a signal of a sensor of the user interface, may be received that indicates that a user intends to interact with at least one of the interactable virtual objects in the second scene (step **806**). The user interface signal may trigger an action associated with the at least one interactable virtual object, wherein the action may cause a change in the position, orientation and/or scaling of the at least one interactable virtual object in the second scene.

As explained with reference to **Fig. 7****,** the presentation engine that controls the rendering process may be configured to apply augmentations to the virtual objects in the second scene. For example, in an embodiment, the augmentation of the virtual objects in the second scene may include scaling the size and/or colour of the virtual objects for users that are visually impaired. In a further embodiment, haptic feedback associated with an interactable virtual object in the second scene may be augmented for users that are physically limited. In yet a further embodiment, the manipulation of an interactable virtual object, e.g. translation, rotation and/or scaling, based on use interaction may be augmented for interactable virtual objects in the second scene.

In step **808,** a change may be determined in the position, orientation and/or scaling of an interactable virtual object in the first scene that corresponds to the at least one interactable virtual object in the second scene. The change may be determined based on the change in the position, orientation and/or scaling of the at least one interactable virtual object in the second scene and a transformation, such as a coordinate transform, which defines the spatial relation between the first coordinate system and the second coordinate system. This way, a change in a position of a virtual object in the second scene can be mapped back into a change in a position of a corresponding virtual object in the first scene. Besides a manipulation, e.g. a translation, rotation and/or scaling, of a virtual object, other types of interactions with virtual objects that cause certain actions of an interactable virtual object in the second screen, such as haptic feedback, a sound effect, a playout of an animation, a playout of media data may be mapped to the first scene as well.

Then, the scene description may be updated (step **810**), wherein the updating of the scene description may include updating the transform information associated with the interactable virtual object in the first scene based on the determined change in the position, orientation and/or scaling of the interactable virtual object in the first scene.

The embodiments include a presentation engine that enables a user to select interactable virtual objects of a first extended reality scene and to render the selected interactable virtual objects of the first scene as a second extended reality scene which has a range of motion that is smaller than the range of motion of the first scene. The selection of the virtual objects may be based on a semantic segmentation of the scene. The first and second scene may form a composite render in the viewport of the rendering device of the user. The location of the second scene in the viewport may be a location that is convenient to the user. The second rendered scene may also be referred to as the accessibility layer. Within this layer, the user with a physical limitation may interact with selected virtual objects of the scene in a similar way as users which do not have a physical limitation interact with virtual objects in the first scene. Interactions within the accessibility layer may be mapped back onto the original virtual objects and the scene description document may be updated in view of these interactions.

Extensions to the MPEG SD information model may allow the presentation engine to provide the functionality of the accessibility layers. The extensions may include labelling parts of the scene, in particular nodes of a scene that are associated with interactable virtual objects using metadata, and by restricting the interactions with objects in the second scene based on interaction rules to limit interactions that a scene author considers reasonable.

Interactions by the user with virtual objects in the accessibility layer may be processed and mapped back to the original scene and the scene description document may be updated in view of these interactions. In some embodiments, scene updates may be distributed to other users in the scene. The presentation engine allows users to configure which accessibility features they need, e.g., by specifying their range of motion and, optimally, augmentations associated with interactions, e.g. movements, associated with interactable virtual objects. The information for configuring the accessibility layer for the presentation engine may be stored in an accessibility configuration file. Using this accessibility configuration file, the presentation engine may determine the dimensions of the bounding box in which virtual objects associated with the accessibility layer may be positioned, the associated limitations to the range of motion and/or the augmentations of the movements.

Further, to preserve fairness amongst the users of an XR experience, interaction rules may be added as metadata to the scene description. These interaction rules define interaction constraints (specified by the scene author) so that the client device associated with the presentation engine and the server that controls and synchronizes updates of the screen description document that is shared between the users of the extended reality application know about the expectations of the scene author. In scenes that are shared with multiple users, interaction rules may be enforced by the clients (or the presentation engine associated with the client) and the server. In single-user scenes the interaction rules may prevent unrealistic interactions in the first scene.

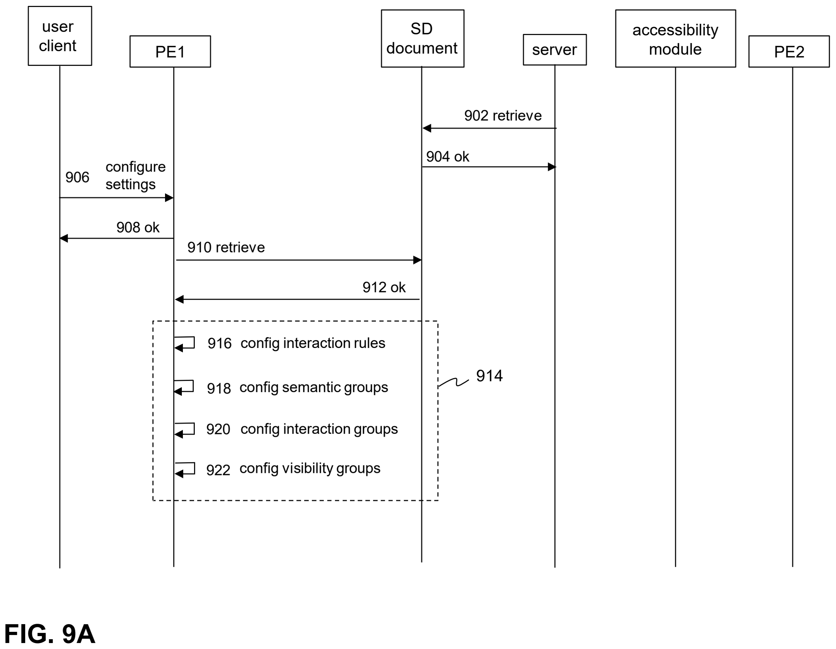

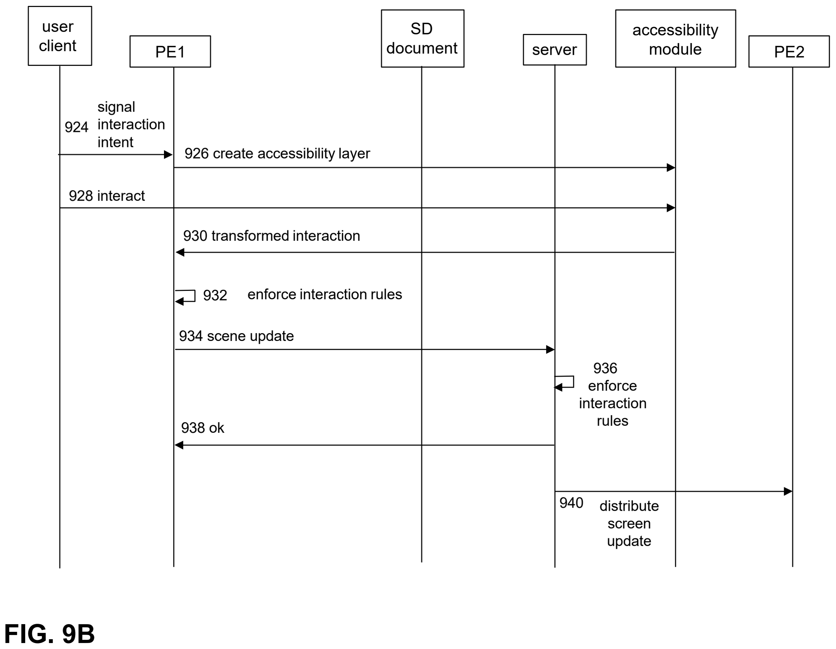

**Fig. 9A** and **9B** illustrate a method of interacting with a virtual object in a scene of an extended reality application according to an embodiment. The process depicted in the figure may relate to a multi-user extended reality application configured to provide a multi-user extended reality experience using a scene description document that is shared between devices of users participating in the extended reality experience and a server for managing and synchronizing the updates of the scene description document.

As shown in **Fig. 9A** the process may start with a server retrieving a scene description document associated with an extended reality application (steps **902** and **904).** In this example, the scene description document may include metadata that may be used by the presentation engine to generate the access layer. Multiple methods may be used to provide a server with a scene description. In an embodiment, a scene description document can be compiled into the server binary, resulting in a static scene that can be loaded from the binary into memory when needed. In an embodiment, the server may be configured to load a scene description document from a memory storage. In another embodiment, the server can be configured to load a scene document from another (remote) server. In response to a query by an external system, a scene document can be obtained from another (remote) server as specified in the query.

A client device may configure a presentation engine with the accessibility needs and information about an effective range of motion (step **906** and **908).** To this end, the client device may send an accessibility configuration file comprising information for configuring the accessibility layer to the presentation engine. Based on the accessibility configuration file, the presentation engine may determine the dimensions of the bounding box in which virtual objects associated with the accessibility layer may be positioned. The accessibility configuration file may further comprise information about the limitations to the user's range of motion and/or information about augmentations for interacting and manipulating virtual objects in a scene.

The presentation engine according to the embodiments in this disclosure may have a mode of operation wherein the presentation engine may render a secondary scene that has a limited bounding area in which virtual object may be positioned. The secondary scene, which comprises at least some of the virtual objects of a primary scene, is used by the user for interaction with virtual objects. Objects in the secondary screen are arranged such that a user with a limited range of motion can interact with the objects. The user may activate the accessibility mode of the presentation engine by explicitly activating an accessibility layer flag. A user may choose the effective range of motion of the secondary scene in a similar manner how the play area is defined. An example of metadata for signalling accessibility settings of a user to the presentation engine is provided below in Table 1:

**Table 1 metadata for signalling accessibility user settings**

| |
|---|
| ```
- TNO_accessibility_user_settings:
                 enable: True
                 bounding_box_effective_range_of_motion:
``` |
| ```
                   min_x: 0.0
                   min_y: 0.0
                   min_z: 0.0
                   max_x: 1.0
                   max_y: 1.0
                   max_z: 1.0
``` |

Hence, a bounding box may be defined that defines the space in which virtual objects may be positioned. The dimensions of the bounding box may be selected such that a user with physical limitations can effectively interact with virtual objects. This way, the bounding box defines a range of motion for interacting with virtual objects in a scene.

In an embodiment, the user can also choose to represent his effective range of motion by specifying a list of boundary points. The effective range is motion is then determined by the largest possible 3D polyhedron that can be fit over these points such that no point lies outside the polyhedron.

The client device may retrieve a scene description document from the server (steps **910** and **912**). In an embodiment, a client device may use one of the methods for retrieving a scene description document as described in the MPEG SD standard. For example, it may request or receive a scene description document from a server using a suitable protocol, such as HTTP. The server may be part of a content delivery network (CDN). In other embodiments, a client device may directly request a scene description document from a server.

When creating a scene based on a scene description document, the embodiments in this disclosure allow a content creator to add additional scene metadata and node metadata that are associated with the accessibility layer. These metadata, which generally may be referred to as interaction information, may include:
- metadata for signalling interaction rules to a presentation engine to limit the capabilities of users to interact with virtual objects to ensure the experience for all users remains fair and consistent.
- metadata for signalling an interaction group in a scene to a presentation engine, wherein an interaction group defines a set of virtual objects in a scene that can interact which each other. An interaction group may be defined by labelling object nodes as belonging to an interaction group;
- metadata for signalling a visibility group in the scene to a presentation engine to determine a set of objects in a scene that can be visible together. A visibility group may be defined by labelling object nodes as belonging to a visibility group
- metadata for signalling a semantic group of objects in a scene to a presentation engine to determine the areas in a scene used to select one or more interactivity groups and/or one or more visibility groups. A semantic group may be defined by labelling object nodes as belonging to a semantic group

Examples of the different types of interaction information that may be inserted in the scene description document are provided below. A first type of metadata relates to interaction rules, which may be used in a scene description document to provide constraints to properties and/or parameters of virtual objects in a secondary scene of an accessibility layer to ensure a smooth, fair and consistent user experience for all users. A scene author may use interaction rules during the authoring of the scene in places where this is desired. In one embodiment, an accessibility constraint may be applied on the scene level. A scene-level accessibility constraint may apply for all nodes in a scene. An example of metadata for signalling scene-level interaction constraints is provided in Table 2 below:

**Table 2 metadata for signalling scene-level interaction constraints**

| |
|---|
| ```
        scene:
         TNO_accessibility_constraints:
          max_velocity: 10
          position_bounds_aabb:
           min:
            x: 0
            y: 0
            z: 0
           max:
            x: 100
            y: 10
            z: 100
          max_angular_velocity: 3 * PI
          clicks_per_second:
           button_primary: 3
           button_secondary: 1.5
           
``` |

Table 2 illustrates the use of metadata associated with different constraints that may be applied on scene level. For example, in an embodiment, metadata may be used to signal the presentation engine that the speed (linear speed and/or angular speed) of a virtual object may be constrained to a maximum value. In other embodiments, the metadata may signal that the speed of a virtual object may be constrained to a minimum value. In further embodiments, the metadata may signal that the speed of a virtual object may be constrained to a range defined by a minimum value and a maximum value.

In a further embodiment, metadata may be used to signal the presentation engine that a position of a virtual object may be constrained to coordinates that are positioned within a bounding box. In an embodiment, the bounding box may be axis-aligned bounding box, wherein the edges of the bounding box are aligned with the coordinate axis of the scene. For example, in an embodiment, the metadata may signal that the position of a virtual object is limited to positions within a bounding box. When defining interaction constraints suitable units, e.g. SI units (e.g., meters and meters per second), may be used for values for position, speed, time, etc.. In a further embodiment, activation of a virtual button may be constrained by a number of allowed clicks per time unit.

In another embodiment, the scene author may provide interaction constraints on a node-level. In principle, a node-level interactivity constrain applies only for the node it is associated with. Examples of such constrains are provided in Table 3:

**Table 3 metadata for signalling node-level interaction constraints**

| |
|---|
| ```
       scene:
         nodes:
           - TNO_accessibility_constraints:
              inherit: true
              max_velocity: 100
              max_angular_velocity: 20
             children:
             - TNO_accessibility_constraints:
               max_velocity: 10 # overrides the parent's constraint
``` |

Examples of node-level interaction constraints include constraints associated with speed and/or position as discussed with reference the scene-level interaction constrains as discussed above with reference to table 3. Hence, constraints regarding speed or location of an object and/or limitations to the use of a button may also be applied at node level.

In an embodiment, an interaction constraint associated with a parent node may also apply to its children's nodes. In an embodiment, an inherit flag may be used to indicate whether or not one or more interaction constraints are inherited by children of a parent node. If the inherit flag signals that interaction constraints are inherited, a child node may inherit one or more constraints as applied to the parent node. In an embodiment, constraints associated with a child may be overridden by its parent's constraints.

When the presentation engine executes an experience simulation (either kinematic or physics-based), the presentation engine and/or the server may enforce the interaction constraints. Enforcing the interaction constraints may include computing a maximum movement per (physics or update) tick, and limiting movements of objects that are associated with interaction constrained nodes to the calculated maximum movement.

In another embodiment, the presentation engine and/or the synchronization server may enforce minimal interaction constraints on the movement (e.g., when moving, at least a minimum speed must be maintained).

In an embodiment, the accessibility metadata may include metadata to define a visibility group. A visibility group may be used to indicate if an interactable object should be made available (made visible) to a user of presentation engine that uses an accessibility layer. The interactable object may be made available based on its position in the scene, the scene timeline and game state. A visibility group may be determined in the same way that game engines perform view frustum culling. Based on the current user viewport, objects that are occluded are not a part of the visibility group. An example of metadata for signalling a visibility group is provided table 4:

**Table 4 metadata for signalling visibility groups**

| |
|---|
| ```
 -       TNO_accessibility_visibility_settings:
       enable: False
        inherit: False
       visible_to_user: True
       activation_settings:
         start_time: 0
         end_time: 0
         start_time_offset: 0
         end_time_offset: 0
         trigger_activate: False
         
``` |

A scene author may choose to deactivate an interactable virtual objects until a fixed period in the timeline or to activate nodes by issuing an update patch for updating a scene description document regarding the nodes that need to be activated. Such patch may be a JSON patch which may be issued after a certain event in the XR experience, for example, when a trigger is activated based on a trigger_activate. To set the time when an object is active, the scene author can use the start_time and end_time fields expressed in seconds since game start or in terms of an offset also expressed in seconds into the source after which the object is activated. These time related fields are in the same format that is used for the MPEG_media extension in MPEG SD. The visibility group of a given node can be inherited from the parent node.

In a further embodiment, the accessibility metadata may include metadata to define a semantic group. A semantic group may be used to categorize one or more node in the scene hierarchy. In an embodiment, a semantic group may include virtual objects associated with nodes that are directly interactable or virtual objects associated with nodes that serve as a target of an interaction. For example, in the example of a scene including a paintbrush and a wall, the paintbrush may be defined as directly interactable virtual object and the wall that is being painted may be defined as a virtual target of the interaction. Nodes in a scene that belong to such group may be assigned in the presentation engine document by the scene author with metadata indicating that these nodes and their associated objects belonging to a semantic group of a certain category. At runtime, these semantic groups may assist the presentation engine to present interactable virtual objects to the user in secondary scene of the accessibility layer along with virtual objects that serve as the target of interactions. In am embodiment, a semantic category of a child node can be inherited from its parent node. To that end, a flag may be used to signal that an object associated with a child node belong to the same semantic group as the objects of the parent node as indicated in Table 5 below:

**Table 5 metadata for signalling semantic groups**

| |
|---|
| ```
 -       TNO_accessibility_semantic_settings:
        inherit: False
       semantic_category: "Painting Equipment"
       
``` |

Going back to **Fig. 9A****,** based on the interaction information in the scene description document, the presentation engine may be configured. This way, interaction rules **916,** semantic groups **918,** interaction groups **920** and visibility groups **922** may be configured. At runtime, the presentation engine may render a first (primary) scene comprising interactable virtual objects based on the scene description document.

As shown in **Fig. 9B****,** the rendering of a secondary scene of the accessibility layer may be started by the presentation engine receiving information from the client device about an interaction intent of the user (step **924**). This may include a signal of the user interface wherein the user selects, either explicitly (e.g. by activating a switch of an XR controller) or implicitly (e.g. by using a gaze and viewport orientation), an interaction with one or more interactable virtual objects. The secondary scene of the accessibility layer may then be rendered based on the one or more interactable virtual objects selected by the user (step **826**).

The rendering of the secondary scene may be performed by an accessibility module that is part of the presentation engine. In another embodiment, the accessibility module may be external to the presentation engine. In that case, the accessibility module may be a renderer that is external to the presentation engine so that a generic API for the presentation engine referred to as the Render Lock-in API may be used to couple an external renderer to the presentation engine. The Render Lock-in API may be configured to control the rendering process of the accessibility module by aligning and synchronizing the rendering state of the accessibility module and the presentation engine. To that end, timing information associated with the accessibility module and the presentation engine and coordinate information associated with the scene bounding boxes used by the accessibility module and the presentation engine are needed for controlling the rendering process.

The virtual objects selected by the user may be referred to as an interactivity group. Interactivity groups may be determined at runtime based on a user's interaction intent. This process can be implicit or explicit. The user may be presented with semantic categories of objects within the visibility group and the user can make an explicit selection to determine the interactivity group. In addition, the user's gaze can be used to make an implicit selection of semantic category. Objects placed in the interactivity group must always be presented to the user and activated in the visibility group. Further, they must belong to the same semantic category. The objects in the interactivity group are then rendered as a secondary scene that is associated with a limited range of motion so that a user with physical limitations can interact with these virtual objects.

This way, the presentation engine may configure based on the selected semantic category a group of virtual objects that are currently visible to the user, interactable and of interest to the user. The presentation engine may then requests the accessibility module to create an accessibility layer, wherein interactions with objects are possible by the user who has a limited range of motion and that meets their accessibility needs. Additionally, a regular interaction with the scene remains possible as well. The secondary scene maintains its own coordinate system in relation to the primary scene. A copy of the final group of selected objects are rendered as a secondary scene of the accessibility layer and the user is able to interact with these composited objects (step **928**). Any changes made to the object transform (position, rotation and/or scale) are then mapped back to the coordinate system of the presentation engine (step **930**).

The presentation engine may checks that the interactions made in the accessibility layer do not violate the interaction rules specified by the content creator in the scene description document (step **932**). The presentation engine then prepares a JSON patch with the necessary scene updates and sends it to the server (step **934**). The server may perform an optional check to enforce the interaction rules (step **936**) and distributes the scene update to all other users in the XR experience (step **940**).

The
embodiments in this disclosure improve the quality of experience for users which have a limited range of motion. In particular, the embodiments in this disclosure reduce the range of motion required to interact with virtual objects in an extended reality scene by enabling the presentation engine to adapt, in particular augment, input movement associated with a user interacting with an object in the scene. The customizability of the accessibility layer makes it possible to accommodate to the accessibility needs of multiple users. Moreover, the embodiments allow content creators to keep the experience for multiple users fair and consistent. Presentation engines that adhere to the listed requirements may ensure that visibility and interactivity does not unfairly deviate between users that do and don't use accessibility features. Further, when using the embodiments, information about the specific accessibility features is only used locally, so leakage of such information to third parties to gain insight into the specific disability of a user is minimized.

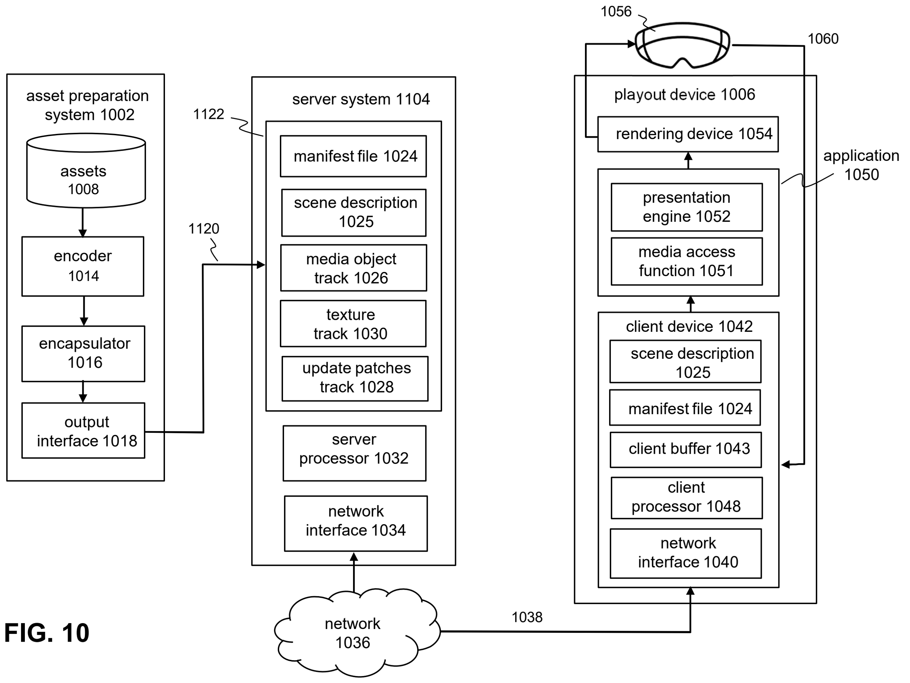

**Fig. 10** depicts a schematic of a system for rendering scenes of an extended reality application. The system may include an asset preparation system **1002,** a server system **1004,** and one or more media playout devices **1006,** wherein each media playout device comprises a client device **1042,** which may communicate via a network **1036** (including the Internet) to the server system.

In some embodiments the content preparation system may be part of the server system. In other embodiments, the content preparation system may be connected to the server system via e.g. the network **1036** or another network, or may be directly communicatively coupled. The server system **1004** may include a server processor **1032** and one or more network interfaces **1034** which are configured to send and receive data via network **1036.** In some embodiment, functionalities of the server system and the asset preparation system may be implemented in the form of a distributed system including a plurality of communicatively connected network devices, including but not limited to routers, bridges, proxy devices, switches, etc. In an embodiment, the server system may be part of a CDN. The asset preparation system **1002** may include a source of stored assets **1008** for 3D rendering, including different type of media data, e.g. 2D and 3D video data, point clouds, 3D objects including 3D meshes and textures, etc. At least part of the assets may be stored in the form of a video-based asset pack, i.e. sequence of video frames wherein the assets, e.g. textures or other type of asset data, are encoded in video frames so that these files can be compressed and streamed based on an adaptive streaming protocol.

The asset preparation system may include an encoder system **1014** comprising one or more encoder instances for encoding the media data. The encoder system may produce one or more encoded media data streams (in short media streams) representing assets, e.g. textures for one or more 3D models in a scene, that are needed for rendering a scene. In some embodiments, an individual stream may be referred to as an elementary stream representing a single, digitally coded component (e.g. video or audio) of a media representation. The asset preparation system may further include a packetizer **1016** for converting elementary streams comprising encoded media data into a packetized stream, e.g. a packetized elementary stream (PES). The PES streams may be formatted, e.g. encapsulated, by an encapsulator **1017** for transport so that that encoded media data can be transmitted to the server system using a suitable media streaming standard such as MPEG-DASH, HLS or CMAF and stored as one or more media files at a storage medium of the server system **1004.** The encapsulator may be configured to generate media files, which are formatted according to a predetermined data format for example CMAF fragment or DASH segments.

Media data which are encoded in one or more elementary streams according to a certain bitrate or quality may form a media representation or in short a representation. The encoder system **1014** may be configured to encode media data of a media title in different ways using a video coding standard to produce different representations of a media title at various bitrates and various characteristics, such as pixel resolutions, frame rates, conformance to various coding standards, etc. These different representations may be used for adaptive bitrate streaming as known from streaming protocols such as DASH. In particular, the encoder system may encode the media data according to any suitable standardized coding scheme such as H.264/AVC, HEVC or VVC and, in case of point cloud, the Geometry-based PCC (G-PCC) and Video-based PCC (V-PCC) compression standards.

The encapsulator **1016** may be configured may be configured to format packets of elementary systems into network abstraction layer (NAL) units. NAL units, which are defined as part of the H.264/AVC and HEVC video coding standards, include Video Coding Layer (VCL) NAL units comprising video data payload and non-VCL NAL units, which may comprise metadata such as parameter sets (important header data that can apply to a large number of VCL NAL units) and supplemental enhancement information (timing information and other supplemental data that may enhance usability of the decoded video signal). Non-VCL NAL units may include sequence parameter sets (SPS), which apply to a series of consecutive coded video pictures called a coded video sequence and picture parameter sets (PPS), which apply to the decoding of one or more individual pictures within a coded video sequence. Non-VCL NAL units may further include Supplemental Enhancement Information (SEI) messages which may contain information for assisting the decoding process.

A set of NAL units may define a so-called access unit which together may form a coded picture (a video frame), This way, the decoding of an access unit generally results in one decoded picture (a decoded video frame). A coded video sequence consists of a series of access units that are sequential in the NAL unit stream and use only one sequence parameter set. Each coded video sequence can be decoded independently of any other coded video sequence, given the necessary parameter set information, which may be conveyed "in-band" or "out-of-band". At the beginning of a coded video sequence is an instantaneous decoding refresh (IDR) access unit. An IDR access unit comprises an intra picture (I-frame) which is a coded picture that can be decoded without decoding any previous pictures in the NAL unit stream. The presence of an IDR access unit indicates that no subsequent picture in the stream will require reference to pictures prior to the intra picture it contains in order to be decoded. The encapsulator may use coded video sequences to produce short non-overlapping short video files, such as DASH segments and CMAF fragments, that are used by adaptive streaming protocols to provide adaptive streaming functionality.

The encapsulator **1016** may be further configured to determine one or more manifest files **1024** and/or scene description files **1025.** An example of a manifest file is a media presentation descriptor (MPD) in case MPEG-DASH is used for streaming the media data. The manifest file and/or scene description files may identify media assets **1026-1028,** such as media objects, e.g. 3D objects, and textures and update patches **1028** for updating a scene description file. The manifest file and/or scene description file may comprise information formatted according to a certain syntax such as the extensible markup language (XML) or JSON. In some embodiments, media assets may be divided into so-called adaptation sets. An adaptation set may define media data associated with a common set of characteristics, including but not limited to e.g. codec, profile and level, resolution, number of views, file format for segments, etc. The manifest file and/or scene description file may include data identifying such adaptation sets and further information associated with characteristics, such as bitrates, of specific representations of adaptation sets. The packetized and encapsulated media files, e.g. CMAF fragments and/or DASH segments, prepared by the assets preparation system may be stored at the server system as tracks **1026-1030** and an associated manifest file **1024** and/or scene description **1025.** These assets may include video-based asset packs as described with reference to the embodiments in this disclosure.

The server processor **1032** may be configured to receive network requests from client devices, such as client device **1042.** The client device may comprise a client processor **1048** configured to request media data and/or metadata, e.g. a manifest filed, that is stored at the server system. Based on a manifest file **1024** and/or scene description stored at the client device, the client device may request (via the client processor) media assets form the server **system** and store the media data in a client buffer **1044.** The buffered (encoded) media assets may be provided to the to a rendering application **1050** comprising a media access function **1051** and a presentation engine **1052** as described with referend to **Fig. 6****.** The MAF may retrieve media assets (upon instruction from the PE) based on the scene description. Functions of the client device, the MAF and the PE may overlap so that the distinction between the different entities is not so strict. In any case, the client device may be configured such that the MAF is capable of receiving video-based asset packs using a HTTP adaptive streaming protocol such as DASH or the like.

Assets processed by the rendering application may be provided to a rendering device **1052,** e.g. a GPU-based renderer comprising a frame buffer for a display **1056.** The display device may be implemented as any type of display devices, including display devices such as a head-mounted device for rendering XR-type of media data (e.g. tiled 360 video data). Sensor information **1060** associated with the display device, e.g. viewing direction and pose information, may be used to control the rendering process and to select the assets that are needed for rendering.

The server processor **1032** and client processor **1048** may be implemented to process requests based on the hypertext transfer protocol (HTTP), for example HTTP version 1.1, which allow transmission of encoded media data based on the chunked transfer encoding mode. This way, the server request processor may be configured to receive HTTP messages, such as HTTP GET or partial GET requests and sent media data in response to the requests back to the client device. The requests may specify a video file or a part of a specific part, e.g. a fragment or a chunk of a fragment, of one of the tracks **1026-1030,** e.g., using a resource locator, such as an URL. In some examples, the requests may also specify a byte range for identifying a chunk in a fragment. Instead of HTTP other client-server communication protocols may be used to handle request and response messages. For example, in an embodiment, a bi-directional communication channel between the client and the sever system may be realized based on a WebSocket protocol. In that case, a handshake request may be used to set up a WebSocket connection between the client and server. Request and response messages may be exchanged between the client and the server over the WebSocket connection. Other protocols that may be used to communicate between the server and the client include Long polling, WebRTC, SignalR, or the like.

The network interface **1040** of the client device may receive media and buffer media, e.g. encapsulated and packetized media assets such as CMAF fragments or chunks of a selected representation. The client processor **1048** may be configured to decapsulate the media files into PES streams and depacketize the PES streams into encoded media assets, e.g. a sequence of encoded video frames of a video based asset pack, which may be provided to the rendering application as described with reference to **Fig. 4**

The devices and modules depicted in **Fig. 10** such as encoder, packetizer, encapsulator, server processor, client processor, etc. may be implemented as any of a variety of suitable processing circuitry, as applicable, such as one or more microprocessors, digital signal processors (DSPs), application specific integrated circuits (ASICs), field programmable gate arrays (FPGAs), discrete logic circuitry, software, hardware, firmware or any combinations thereof. Alternatively and/or additionally these devices and modules may comprise an integrated circuit, a microprocessor, and/or a wireless communication device.

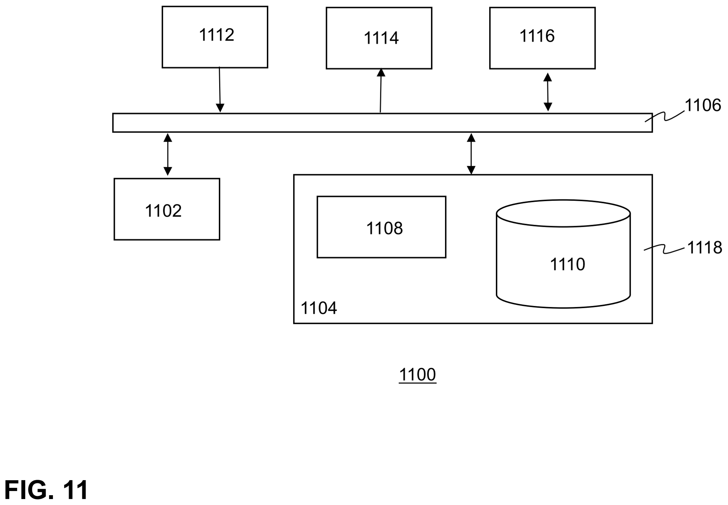

The devices and systems described with reference to embodiments in this disclosure, such as the client device, the server system and the content preparation system are typically implemented as one or more communicatively connected data processing systems. **Fig. 11** is a block diagram illustrating an exemplary data processing system that may be used in as described in this disclosure. Data processing system **1100** may include at least one processor **1102** coupled to memory elements **1104** through a system bus **1106.** As such, the data processing system may store program code within memory elements **1104.** Further, processor **1102** may execute the program code accessed from memory elements **1104** via system bus **1106.** In one aspect, data processing system may be implemented as a computer that is suitable for storing and/or executing program code. It should be appreciated, however, that data processing system may be implemented in the form of any system including a processor and memory that is capable of performing the functions described within this specification.

Memory elements **1104** may include one or more physical memory devices such as, for example, local memory **1108** and one or more bulk storage devices **1110.** Local memory may refer to random access memory or other non-persistent memory device(s) generally used during actual execution of the program code. A bulk storage device may be implemented as a hard drive or other persistent data storage device. The data processing system **1100** may also include one or more cache memories (not shown) that provide temporary storage of at least some program code in order to reduce the number of times program code must be retrieved from bulk storage device **1110** during execution.

Input/output (I/O) devices depicted as input device **1112** and output device **1114** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1116** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system.

As pictured in **Fig. 11****,** memory elements **1104** may store an application **1118.** It should be appreciated that data processing system may further execute an operating system (not shown) that can facilitate execution of the application. Application, being implemented in the form of executable program code, can be executed by data processing system, e.g., by processor **1102.** Responsive to executing application, data processing system may be configured to perform one or more operations to be described herein in further detail.

In one aspect, for example, data processing system may represent a client data processing system. In that case, application **1118** may represent a client application that, when executed, configures data processing system to perform the various functions described herein with reference to a "client". Examples of a client can include, but are not limited to, a personal computer, a portable computer, a mobile phone, or the like. In other aspects, data processing system may represent a server data processing system. In that case, application **1118** may represent a server application that, when executed, configures data processing system to perform the various functions described herein with reference to a "server".

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Method of interacting with a virtual object in a scene of an extended reality application, the method comprising:
rendering based on a scene description a first scene comprising virtual objects, the first scene being associated with a first coordinate system, a first bounding space defining a first range of motion for interacting with virtual objects in the first scene, the scene description comprising a scene graph, wherein nodes of the scene graph include object nodes, each object node being associated with a virtual object and with object metadata, the object metadata comprising interaction information identifying if a virtual object is an interactable virtual object and transform information comprising a position, orientation and/or scaling of a virtual object;
selecting nodes associated with interactable virtual objects based on the interaction information and rendering a second scene comprising interactable virtual objects associated with the selected nodes, the second scene being associated with a second coordinate system, a second bounding space defining a second range of motion for interacting with virtual objects in the second scene, the second range of motion being smaller than the first range of motion;
receiving a user interface signal indicative of a user interacting with at least one of the interactable virtual objects in the second scene, the user interface signal triggering an action associated with the at least one interactable virtual object, the action causing a change in the position, orientation and/or scaling of the at least one interactable virtual object in the second scene;
determining a change in the position, orientation and/or scaling of an interactable virtual object in the first scene that corresponds to the at least one interactable virtual object in the second scene, the determining being based on the change in the position, orientation and/or scaling of the at least one interactable virtual object in the second scene and a transformation, preferably a coordinate transform, defining a spatial relation between the first coordinate system and the second coordinate system; and,
updating the scene description, the updating including updating the transform information associated with the interactable virtual object in the first scene based on the change in the position, orientation and/or scaling of the interactable virtual object in the first scene.

2. Method according to claim 1 further including:
determining an update patch, preferably a JSON patch, for updating the scene description; and
sending the update patch to a server for distributing the update patch to other users of the extended reality application.

3. Method according to claims 1 or 2 wherein the interaction information further comprises information for identifying whether an interactable virtual object belongs to one or more semantic categories and wherein nodes associated with interactable virtual objects are selected based on a semantic category.

4. Method according to any of claims 1-3 wherein the interaction information further comprises information for identifying whether an interactable virtual object is available for user interaction, preferably the availability of an interactable virtual object being based on the position of the interactable virtual object in the scene or a scene timeline.

5. Method according to any of claims 1-4 wherein the interaction information further comprises one or more interaction rules, the one or more interaction rules defining one or more constraints for the position, speed and/or behaviour of interactable virtual objects in the first scene.

6. Method according to any of claims 1-5 further comprising:
before updating the scene description, determining if the change in the position, orientation and/or scaling of the interactable virtual object in the first scene complies with one or more interaction rules, preferably the one or more interaction rules including:
determining if the change in the position and/or orientation of the interactable virtual object in the first scene is larger than a maximum value and/or smaller than a minimal value; and/or,
determining if the change in the position and/or orientation of the interactable virtual object in the first scene per unit of time is larger than a maximum value and/or smaller than a minimal value.

7. Method according to any of claims 1-6 wherein the interaction information includes one or more triggers associated with each interactable virtual object, each trigger of the one or more triggers defining at least one of: a collision trigger, a proximity trigger, a visibility trigger, a user input trigger, a timer trigger that is activated based on a timer

8. Method according to claim 7 wherein the collision and/or proximity trigger are activated based a distance between the interactable virtual object and another virtual object.

9. Method according to claim 7 wherein the visibility trigger is based on the interactable virtual object appearing in the viewport of an extended reality rendering device; or, wherein the user input trigger is based a user activating a switch of an extended reality user interface controller.

10. Method according to any of claims 7-9 wherein a trigger is associated with one or more actions so that if a trigger is activated at least part of the one or more actions are executed, preferably the one or more actions including at least one of: a manipulation, e.g. a translation, rotation and/or scaling, of the interactable virtual object, a haptic feedback, a sound effect, a playout of an animation, a playout of media data.

11. Method according to any of claims 1-10 wherein the first scene is rendered in the viewport of a rendering device and wherein the second scene is rendered as a graphics overlay at a predetermined location in the viewport

12. Method according to any of claims 1-11 wherein a presentation engine (PE) is configured to control the rendering of the first and second scene, the presentation engine being further configured to instruct a media access function (MAF) to execute at least one of: the retrieval of media assets associated with the virtual objects, allocation of one or more buffers, decoding of the media assets and the storage of at least part of decoded media assets in one or more allocated buffers.

13. An apparatus, preferably a rendering device, comprising:
a computer readable storage medium having computer readable program code embodied therewith, and a processor, preferably a microprocessor, coupled to the computer readable storage medium, wherein responsive to executing the computer readable program code, the processor is configured to perform executable operations comprising:
rendering a first scene comprising virtual objects based on a scene description, the first scene being associated with a first coordinate system, a first bounding space defining a first range of motion for interacting with virtual objects in the first scene, the scene description comprising a scene graph, wherein nodes of the scene graph include object nodes, each object node being associated with a virtual object and with object metadata, the object metadata comprising interaction information identifying if a virtual object is an interactable virtual object and transform information comprising a position, orientation and/or scaling of the virtual object;
selecting nodes associated with interactable virtual objects based on the interaction information and rendering a second scene comprising interactable virtual objects associated with the selected nodes, the second scene being associated with a second coordinate system, a second bounding space defining a second range of motion for interacting with virtual objects in the second scene, the second range of motion being smaller than the first range of motion;
receiving a user interface signal indicative of a user interacting with at least one of the interactable virtual objects in the second scene, the user interface signal triggering an action associated with the at least one interactable virtual object, the action causing a change in the position, orientation and/or scaling of the at least one interactable virtual object in the second scene;
determining a change in the position, orientation and/or scaling of an interactable virtual object in the first scene that corresponds to the at least one interactable virtual object in the second scene, the determining being based on the change in the position, orientation and/or scaling of the at least one interactable virtual object in the second scene and a transformation, preferably a coordinate transform, defining a spatial relation between the first coordinate system and the second coordinate system; and,
updating the scene description, the updating including updating the transform information associated with the interactable virtual object in the first scene based on the change in the position, orientation and/or scaling of the interactable virtual object in the first scene.

14. An apparatus according to claim 13 wherein the processor is further configured to perform any of the method steps according to claims 2-12.

15. A computer program product comprising instructions which, when the program is executed by a computer, cause the computer to carry the method steps according to any of claims 1-12.
